# FASCICULE DE BREVET EUROPEEN

(11) **EP 4 341 041 B1**
(45) Date de publication et mention de la délivrance du brevet: **11.11.2026**
(21) Numéro de dépôt: 22727386.9
(22) Date de dépôt: 11.05.2022
(51) Int. Cl.: B24B 5/00, C23C 24/04

(54) **PROCEDE DE TRAITEMENT DE SURFACE D'UNE TIGE DE PISTON**
VERFAHREN ZUR OBERFLÄCHENBEHANDLUNG EINER KOLBENSTANGE
METHOD FOR TREATING A SURFACE OF A PISTON ROD

(30) Priorité: 20.05.2021 FR 2105265
(43) Date de publication de la demande: 27.03.2024
(73) Titulaire: Safran Landing Systems, 78140 Vélizy-Villacoublay (FR)
(72) Inventeur: AUREGAN, Gilles, 77550 Moissy-Cramayel (FR); SOULA, Aurélie, 77550 Moissy-Cramayel (FR)
(74) Mandataire: Cabinet Camus Lebkiri
(86) Numéro de dépôt international: PCT/FR2022/050900
(87) Numéro de publication internationale: WO 2022/243623

(56) Documents cités:
- EP-A1- 2 130 944
- EP-A1- 3 112 263
- KR-A- 20200 064 538

## Description

### DOMAINE TECHNIQUE DE L'INVENTION

Le domaine technique de l'invention est celui du traitement de surface de pièces mécaniques telles que des tiges de piston et des tiges obtenues.

Un procédé de traitement d'un tel tige pour obtenir une certaine dureté et rugosité de surface est connu du document EP 2 130 944 A1.

La présente invention concerne en particulier les tiges de piston équipant les systèmes de freinage des trains aéronautiques.

### ARRIERE-PLAN TECHNOLOGIQUE DE L'INVENTION

Les pistons qui équipent les systèmes de freinage permettent de mettre en compression un ensemble de disques emmanché dans la roue et sur l'essieu. Cet ensemble, appelé puits de chaleur, est composé de stators solidaires de l'essieu et de rotors solidaires de la roue. La compression des disques permet de freiner le mouvement de rotation relatif entre rotors et stators. Les pistons concernés par la présente invention sont des pistons hydrauliques, mis en mouvement par du fluide hydraulique sous pression.

Les pistons sont directement vissés dans une couronne solidaire du système de freinage et doivent satisfaire les fonctions principales suivantes:
- appliquer l'effort de pression sur le puits de chaleur,
- rattraper automatiquement l'usure dudit puits de chaleur,
- rappeler le piston pour éviter le freinage résiduel dans le système de freinage,
- assurer la fonction étanchéité.
La tige est l'un des composants majeurs du piston. Elle contribue à la fonction de rattrapage d'usure du puits de chaleur en déformant progressivement un tube de déformation grâce à une sphère vissée à son extrémité.

La tige requiert des propriétés mécaniques suffisantes afin d'une part de tenir les charges nécessaires à la déformation du tube de déformation mais également pour résister aux efforts de précontrainte liés au serrage de la sphère.

La tige doit également remplir une fonction étanchéité entre le milieu pressurisé, coté du fluide hydraulique, et le milieu non pressurisé, coté du disque de frein, à l'aide d'un joint de tige. La tige requière une rugosité spécifique afin de limiter l'usure du joint tout en favorisant le glissement de celui-ci, et une dureté suffisante pour éviter l'altération de cette rugosité par le frottement contre le joint. Le joint peut être en élastomère monobloc ou en plusieurs parties : par exemple un joint élastomère avec une partie plus dure en PTFE (Polytétrafluoroéthylène)

Actuellement, ces tiges sont réalisées en acier inoxydable, par exemple de type 15-5PH, qui présente les propriétés mécaniques nécessaires pour assurer la fonction rattrapage usure.

Le corps de la tige en interface avec le joint est revêtu d'un dépôt de chrome dur . Ce dépôt est rectifié afin d'obtenir la rugosité adéquate à la fonction d'étanchéité, et sa dureté élevée permet de résister au frottement contre le joint de tige.

Cependant, cette solution technique pose plusieurs problèmes :
- Le dépôt de chrome dur peut présenter une porosité pouvant favoriser une fuite hydraulique.
- La gamme de chromage et de rectification est complexe et coûteuse,
- La gamme de chromage ne répond pas aux exigences environnementales.

Une solution de tige en acier inoxydable 15-5PH rectifié et sans chrome dur existe aussi chez d'autres fournisseur de frein aéronautique, mais cette solution n'est pas applicable pour des joints de tige qui requièrent un minimum de dureté superficielle de la tige supérieure à 45HRC, c'est-à-dire un joint en deux parties : élastomère et PTFE.

### RESUME DE L'INVENTION

L'invention offre une solution aux problèmes évoqués précédemment, en permettant de réaliser plus simplement des tiges assurant une étanchéité satisfaisante et ne nécessitant pas de traitement de surface supplémentaire.

Ainsi on utilise un matériau présentant à la fois les propriétés mécaniques nécessaire à la fonction de rattrapage d'usure (Rm > 1100 MPa), à la fois une capacité à être usiné et rectifié pour atteindre une rugosité satisfaisante à la fonction d'étanchéité (valeur de Ra < 0,2 µm, limite définie ), dans les conditions de sollicitations décrites précédemment et spécifiques à l'application, et à la fois une dureté suffisante pour résister au frottement avec le joint et garantir l'intégrité de l'état de surface (supérieure à 45 HRC).

Un aspect de l'invention concerne un procédé de traitement de surface d'une tige d'un piston, la tige étant en alliage à haute résistance mécanique, caractérisé en ce qu'il comprend les étapes suivantes :
- une étape de rectification et,
- une étape de finition jusqu'à l'obtention d'une rugosité moyenne Ra ≤ 0,2µm.

Avantageusement, la rugosité moyenne Ra ≤ 0,1µm.

On obtient ainsi un état de surface permettant de tenir les exigences d'étanchéité dynamique du piston sans nécessiter de chromage. On pourra par exemple avoir une hauteur maximum Rp ≤ 0,4µm et un écart maximum Rz ≤ 2,0µm.

Avantageusement, l'alliage a une dureté minimum supérieure à 45HRC. Cela permet l'utilisation d'une plus grande variété de joints. L'alliage pourra être un alliage métallique.

Avantageusement, l'alliage est un superalliage à base de nickel. On pourra par exemple utiliser un alliage de type IN718.

Avantageusement, l'alliage a une résistance à la traction Rm > 1100MPa. Cette résistance permet à la tige de pouvoir déformer le tube de déformation.

La rugosité finale peut être obtenue de deux façons : avec une rectification suivie d'une superfinition par polissage mécanique (abrasion par disque), ou bien avec une rectification suivie d'une finition par tribofinition.

Avantageusement, l'étape de finition est une tribofinition. Cette technique permet d'obtenir le niveau de rugosité souhaitée. La tribofinition regroupe l'ensemble des procédés industriels d'usinage par abrasion permettant par la mise en mouvement de médias abrasifs autour d'une pièce dans une cuve, l'amélioration de la rugosité (par abrasion, cisaillement, percussion). On peut citer le tonnelage, les vibrateurs linéaires et circulaires, les machines à force centrifuge, la smuritropie ou la finition de surface.

Un premier aspect de l'invention concerne une tige de piston obtenue par le procédé de traitement de surface selon une des caractéristiques précédentes.

Un deuxième aspect de l'invention concerne un piston comprenant une tige de piston obtenu par le procédé selon l'invention.

Avantageusement, la tige de piston comprend un joint d'étanchéité entre un milieu pressurisé et un milieu non pressurisé. Les caractéristiques de surface de la tige permettent de limiter l'usure du joint et de garantir une bonne étanchéité malgré la différence de pression dans le cas de pistons secs.

Avantageusement, la tige est disposée dans un tube de déformation et comprend une sphère à une première extrémité coopérant avec le tube de déformation. La tige est suffisamment rigide pour d'une part de tenir les charges nécessaires à la déformation du tube de déformation mais également pour résister aux efforts de précontrainte liés au montage de l'écrou et de la sphère.

Un troisième aspect de l'invention concerne un système de freinage comprenant au moins un piston selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] est une coupe d'un système de freinage d'un train d'avion,
[Fig. 2] montre le détail d'un piston équipant le système de freinage de la figure1,
[Fig. 3] montre l'usure d'un joint du piston de la figure 2,
[Fig. 4] est un tableau montrant les résultats des essais d'usure en fonction de la rugosité moyenne Ra de la surface de la tige,
[Fig. 5] est un tableau montrant les résultats des essais d'usure en fonction du paramètre de rugosité Rp de la surface de la tige,
[Fig. 6] montre l'aspect de la tige avant et après les essais avec les différentes rugosités,
[Fig. 7] représente les différents paramètres de rugosité.

### DESCRIPTION DETAILLEE

Sauf précision contraire, un même élément apparaissant sur des figures différentes présente une référence unique.

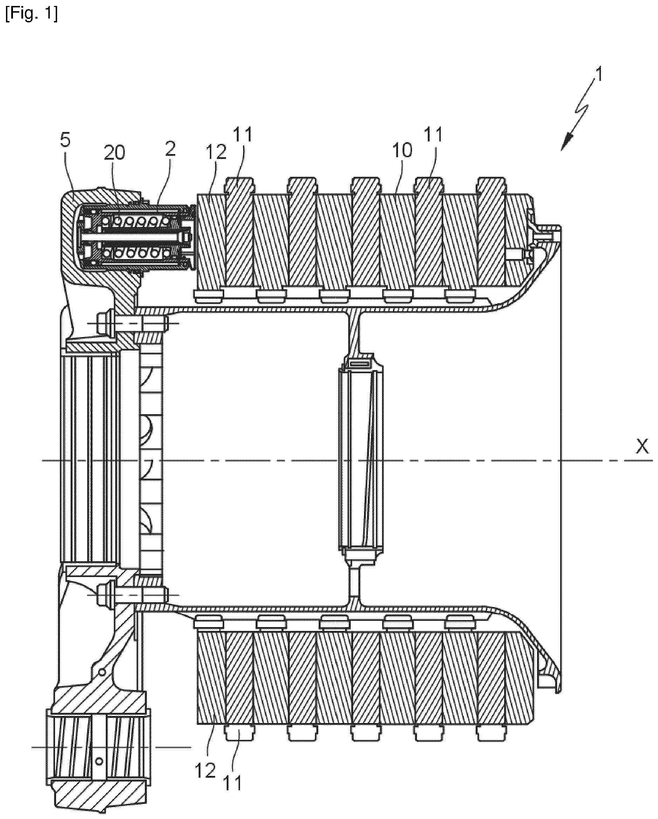

Le système de freinage 1 illustré figure 1 est destiné à un train d'atterrissage aéronautique. Il est constitué d'une couronne 5 et de plusieurs disques de frein empilés les uns sur les autres, constituant ce qu'on appelle un "puits de chaleur" en raison de la température qu'ils peuvent atteindre. La moitié de ces disques est solidaire de la roue (ou jante) d'axe X et tourne avec elle, ce sont les disques rotors 11; l'autre moitié est solidaire de l'avion par l'intermédiaire de l'essieu et ne tourne pas, ce sont les disques stators 10, 12. Ils sont montés en alternance, pour former un ensemble appelé puits de chaleur. Ce sont les frottements des disques les uns sur les autres qui assurent le freinage.

Le premier disque 12 sur lequel agissent des pistons 2 (un seul représenté) est un disque stator solidaire de l'essieu. Lorsque les freins sont déclenchés, le piston 2 s'étend hors de la chemise 3 sous l'effet de la pression hydraulique et met en compression le puits de chaleur. Lorsque la pression est relâchée, un ressort 20 repousse le piston 2 dans la chemise 3.

Le piston 2 comprend un corps creux 25 et inclut un guide 24 qui tient le ressort 20 entre deux surfaces d'appui: une première surface 240 solidaire du guide 24 et une deuxième surface 250 solidaire du corps creux 25.

Le piston 2 comprend aussi une tige 21 qui sert de dispositif d'ajustement automatique de l'usure des freins. La tige 21 se place dans un tube de déformation 22 et comprend à une première extrémité 210 une sphère 23 dont le diamètre est supérieur au diamètre du tube de déformation 22. Au fur et à mesure que les disques de frein vont s'user, la sphère 23 va reculer en déformant le tube de déformation 22 et ainsi déplacer la course du piston pour compenser l'usure. La distance entre les disques stator 11 et les disques rotor 10, 12 est ainsi maintenue à un minimum constant par le déplacement de la sphère 23 dans le tube de déformation 22 et permet d'assurer un même débattement de la pédale de frein quelle que soit l'usure des disques.

Le fonctionnement du piston 2 est le suivant : un fluide hydraulique 4, tel que de l'huile, arrive d'un côté du piston 2 et pousse celui-ci selon la force F pour le mettre en contact avec le premier disque stator 12 jusqu'à ce que les disques stator 12, 10 et les disques rotor 11 soient en contact. Si les disques présentent une usure, le piston 2 va avancer plus et ainsi la tige 21 va reculer dans le tube de déformation 22, ce qui va allonger la course du piston 2 de l'épaisseur de l'usure des disques. Quand les freins sont relâchés, le piston 2 est repoussé en arrière par le ressort 20 placé du côté opposé à l'arrivée du fluide hydraulique 4.

La tige 21 est reliée par une deuxième extrémité 211 à la couronne 5 du système de freinage 1. La tige 21 traverse donc la deuxième surface 250 du corps creux 25 par un trou 251. Ce trou 251 est équipé d'un joint 212 qui garantit l'étanchéité autour de la tige 21 entre le fluide hydraulique 4 sous pression et l'extérieur à la pression atmosphérique. Quand le piston 2 bouge, le joint 212 va coulisser sur la tige 21 ce qui peut entrainer une dégradation du joint 212 si la surface de la tige 21 ne présente pas les conditions de surface, de dureté et de rugosité suffisants.

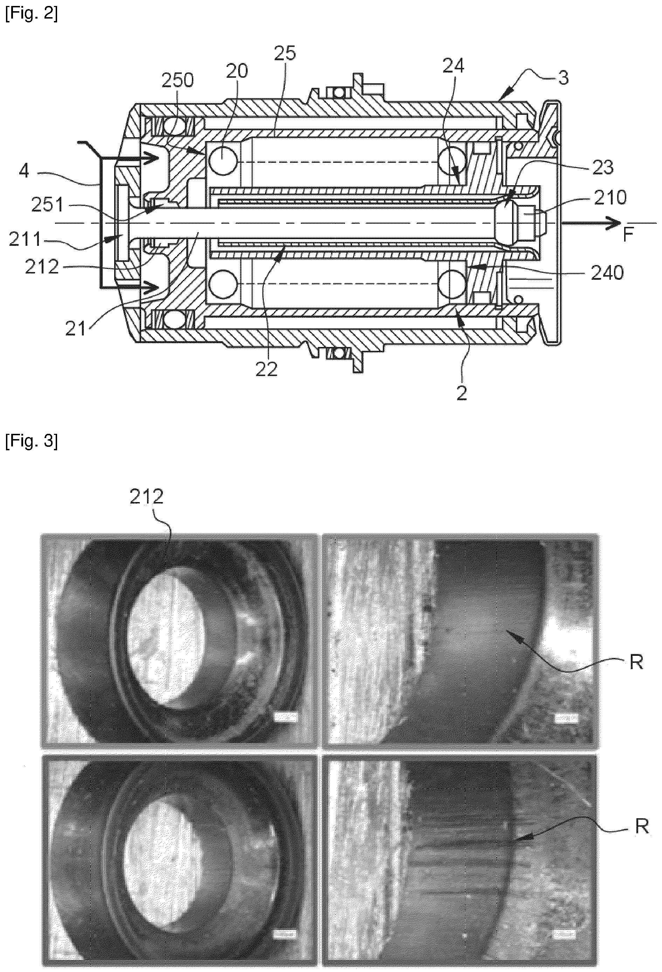

On peut ainsi voir sur la figure 3, deux exemples d'usure du joint 212 où des rayures R sont visibles. L'état de surface permettant de tenir les exigences d'étanchéité dynamique est donc primordial. Ainsi les exigences actuelles au plan des tiges chromées demandent une rugosité moyenne Ra < 0,2 µm. En réalité, la rugosité est largement inférieure (Ra<0,1 µm) du fait de la gamme de rectification employée pour fermer le faïençage du chrome qui, sinon, constitue une voie de fuite hydraulique. Par ailleurs, des essais échelle 1 avec des états de surface supérieurs à Ra 0,1 µm montrent une usure des joints 212 de tiges, pouvant laisser présager des problèmes de fuite en service.

La rugosité d'une surface est caractérisée par des irrégularités et comprend plusieurs paramètres : la rugosité moyenne Ra, la hauteur maximale moyenne des pics Rp et l'amplitude maximum du profil, Rz, sur la longueur mesurée.

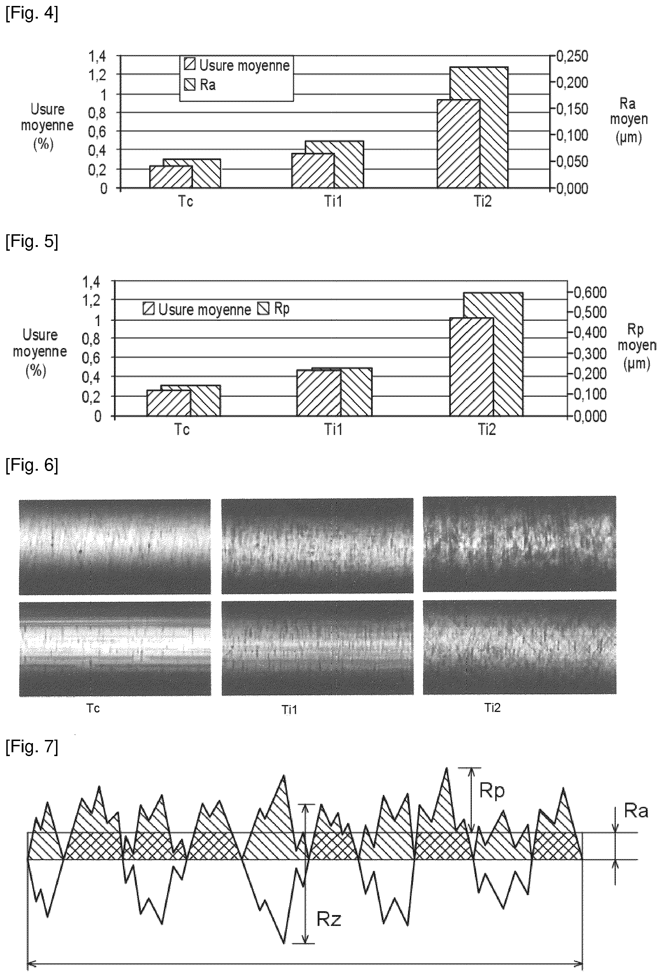

Une étude spécifique a donc été menée avec des tiges 21 qui ont été fabriquées avec différents niveaux de rugosité moyenne Ra : 0,04, 0,08, et 0,2. Des essais tribologiques ont été menés sur ces tiges et ont donné les résultats illustrés figures 4 et 5.

On peut voir sur la figure 4 qu'une tige chromée Tc avec une rugosité moyenne Ra d'environ 0,05 µm entraine une usure moyenne inférieure à 0,4%, tandis qu'une première tige Ti1 en alliage de nickel avec une rugosité Ra inférieure à 0,1µm entraine une usure moyenne inférieure à 0,6% et qu'une deuxième tige Ti2 en alliage de nickel avec une rugosité proche de Ra = 0,2µm entraine une usure moyenne supérieure à 1,2%.

On constate également sur la figure 5 que la hauteur maximum Rp a une influence sur l'usure moyenne du joint.

La surface des différentes tiges est visible à la figure 6 avec de gauche à droite la surface de la tige chromée Tc puis les deux tiges **Ti1** et Ti2 avant et après frottement sur le joint. La tige chromée Tc présente des stries d'usure liées au frottement répété avec la tige, alors que les tiges en alliage de nickel, comme l'Inconel 718, n'en montrent pas, et sont par conséquent aptes à résister à l'usure du frottement du joint.

Ces essais ont permis de définir le minimum d'exigences à spécifier afin d'assurer la performance : Ra max 0,2 µm.

## Revendications

1. Procédé de traitement de surface d'une tige (21) d'un piston (2), la tige (21) étant en alliage à haute résistance mécanique d'une dureté supérieue à 45 HRC, **caractérisé en ce qu'**il comprend les étapes suivantes :
- une étape de rectification et,
- une étape de finition jusqu'à l'obtention d'une rugosité moyenne Ra ≤ 0,2µm.

2. Procédé de traitement de surface selon la revendication précédente, **caractérisé en ce que** l'alliage est un superalliage à base de nickel.

3. Procédé de traitement de surface selon la revendication précédente, **caractérisé en ce que** l'alliage a une résistance à la traction Rm > 1100MPa.

4. Procédé de traitement de surface selon une des revendications précédentes, **caractérisé en ce que** l'étape de finition est une tribofinition.

5. Tige (21) de piston en alliage à haute résistance mécanique avec une dureté supérieure à 45 HRC, **caractérisée par** une surface résultante d'une étape de rectification et une étape de finition jusqu'à l'obtention d'une rugosité moyenne Ra ≤ 0.2 µm.

6. Piston (2) comprenant une tige (21) de piston selon la revendication précédente.

7. Piston (2) selon la revendication précédente, **caractérisé en ce que** la tige (21) de piston comprend un joint d'étanchéité (212) entre un milieu pressurisé et un milieu non pressurisé.

8. Piston (2) selon la revendication précédente, **caractérisé en ce que** la tige (21) est disposée dans un tube de déformation (22) et comprend une sphère (23) à une première extrémité (210) coopérant avec le tube de déformation (22).

9. Système de freinage (1) **caractérisé en ce qu'**il comprend au moins un piston (2) selon une des revendications 6 à 8.

## Patentansprüche

1. Verfahren zur Oberflächenbehandlung einer Kolbenstange (21) eines Kolbens (2), wobei die Kolbenstange (21) aus einer hochfesten Legierung mit einer Härte von mehr als 45 HRC besteht, **dadurch gekennzeichnet, dass** es die folgenden Schritte umfasst:
- einen Schleifschritt und
- einen Endbearbeitungsschritt, bis eine mittlere Rauheit Ra ≤ 0,2 µm erreicht ist.

2. Verfahren zur Oberflächenbehandlung nach dem vorstehenden Anspruch, **dadurch gekennzeichnet, dass** die Legierung eine Superlegierung auf Nickelbasis ist.

3. Verfahren zur Oberflächenbehandlung nach dem vorstehenden Anspruch, **dadurch gekennzeichnet, dass** die Legierung eine Zugfestigkeit Rm > 1100 MPa aufweist.

4. Verfahren zur Oberflächenbehandlung nach einem der vorstehenden Ansprüche, **dadurch gekennzeichnet, dass** der Endbearbeitungsschritt ein Tribofinish ist.

5. Kolbenstange (21) aus einer Legierung mit hoher mechanischer Festigkeit und einer Härte von mehr als 45 HRC, durch eine Oberfläche gekennzeichnet, die durch einen Schleifschritt und einen Endbearbeitungsschritt bis zum Erreichen einer mittleren Rauheit Ra ≤ 0,2 µm entsteht.

6. Kolben (2) mit einer Kolbenstange (21) nach dem vorstehenden Anspruch.

7. Kolben (2) nach dem vorstehenden Anspruch, **dadurch gekennzeichnet, dass** die Kolbenstange (21) eine Dichtung (212) zwischen einem unter Druck stehenden Medium und einem drucklosen Medium umfasst.

8. Kolben (2) nach dem vorstehenden Anspruch, **dadurch gekennzeichnet, dass** die Kolbenstange (21) in einem Verformungsrohr (22) angeordnet ist und an einem ersten Ende (210), das mit dem Verformungsrohr (22) zusammenwirkt, eine Kugel (23) aufweist.

9. Bremssystem (1), **dadurch gekennzeichnet, dass** es mindestens einen Kolben (2) nach einem der Ansprüche 6 bis 8 umfasst.

## Claims

1. A method for treating surface of a rod (21) of a piston (2), the rod (21) being made of a high-strength alloy with a minimum hardness greater than 45 HRC, **characterised in that** it comprises the following steps:
- a grinding step and,
- a finishing step until an average roughness Ra ≤ 0.2µm is obtained.

2. The surface treatment method according to the preceding claim, **characterised in that** the alloy is a nickel-based superalloy.

3. The surface treatment method according to the preceding claim, **characterised in that** the alloy has a tensile strength Rm > 1100MPa.

4. The surface treatment method according to one of the preceding claims, **characterised in that** the finishing step is tribofinishing.

5. A piston rod (21) made of a high-strength alloy with a minimum hardness greater than 45 HRC, **characterised by** the surface resulting of a grinding step and a finishing step until an average roughness Ra ≤ 0.2µm is obtained.

6. A piston (2) comprising a piston rod (21) according to the preceding claim.

7. The piston (2) according to the preceding claim, **characterised in that** the piston rod (21) comprises a seal (212) between a pressurised environment and a non-pressurised environment.

8. The piston (2) according to the preceding claim, **characterised in that** the rod (21) is disposed in a deformation tube (22) and comprises a sphere (23) at a first end (210) cooperating with the deformation tube (22).

9. A braking system (1) **characterised in that** it comprises at least one piston (2) according to one of claims 6 to 8.
